# EUROPÄISCHE PATENTSCHRIFT

(11) **EP 0 535 516 B1**
(45) Veröffentlichungstag und Bekanntmachung des Hinweises auf die Patenterteilung: **31.07.1996**
(21) Anmeldenummer: 92116233.5
(22) Anmeldetag: 23.09.1992
(51) Int. Cl.: C08F 4/22, C08F 4/02, C08F 10/02

(54) **Verfahren zur Herstellung eines Trägerkatalysators für die Polymerisation von alpha-Olefinen**
Procedure for manufacturing a catalyst support for the polymerization of alpha-olefins
Procédé pour la préparation d'un catalyseur à support destiné à polymérisation des alpha-oléfines

(30) Priorität: 04.10.1991 DE 4132894
(43) Veröffentlichungstag der Anmeldung: 07.04.1993
(73) Patentinhaber: BASF Aktiengesellschaft, 67063 Ludwigshafen (DE)
(72) Erfinder: Funk, Guido, Dr., W-6520 Worms 1 (DE); Hemmerich, Rainer, Dr., W-6718 Gruenstadt (DE); Gropper, Hans, Dr., W-6703 Limburgerhof (DE); Kolk, Erich, Dr., W-6702 Bad Duerkheim (DE); Follmer, Godofredo, Dr., W-6701 Maxdorf (DE)

(56) Entgegenhaltungen:
- EP-A- 0 263 525
- EP-A- 0 270 918
- EP-A- 0 270 919
- EP-A- 0 429 937
- DE-C- 2 540 278
- GB-A- 2 114 463
- US-A- 4 380 616
- US-A- 4 384 086
- US-A- 4 386 016
- US-A- 4 392 990
- US-A- 4 559 394

## Beschreibung

Die vorliegende Erfindung betrifft ein neues Verfahren zur Herstellung eines Trägerkatalysators für die Polymerisation von α-Olefinen, bei welchem man
(1) einen Siliciumdioxid enthaltendes Trägergel herstellt, indem man
   (1.1) in einen unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfenförmig versprüht, zum Hydrogel erstarren läßt und das so erhaltene Hydrogel ohne vorherige Alterung durch Waschen von Salzen befreit,
   (1.2) gegebenenfalls aus dem Hydrogel (1.1) mit Hilfe mindestens eines C₁- bis C₄-Alkohols und/oder C₃- bis C₅-Ketons maximal 30 Gew.-% des im Hydrogel enthaltenen Wassers extrahiert,
   (1.3) das Hydrogel trocknet, wobei Trägergel-Bildung erfolgt, und
   (1.4) das resultierende Trägergel mahlt und nach Teilchengröße fraktioniert,
(2) die resultierenden Trägergelteilchen (1) mit Chromtrioxid oder einer unter den Bedingungen des Verfahrensschritts (3) in Chromtrioxid überführbaren Chromverbindung belädt, wonach man
(3) die chromhaltigen Trägergelteilchen (2) in einem wasserfreien, Sauerstoff in einer Konzentration von über 10 Vol.-% enthaltenden Gasstrom während 10 bis 1000 Minuten auf 400 bis 1100°C erhitzt.

Desweiteren betrifft die vorliegende Erfindung einen neuen Trägerkatalysator zur Herstellung von hochmolekularen Homo- und Copolymerisaten des Ethylens, welcher nach dem neuen Verfahren erhältlich ist. Ferner betrifft die vorliegende Erfindung die mit Hilfe dieses neuen Trägerkatalysators hergestellten Homo- und Copolymerisate des Ethylens.

Das eingangs genannte Verfahren zur Herstellung eines Trägerkatalysators für die Polymeristion von α-Olefinen ist bis auf die erfindungsgemäße Verbesserung aus der EP-A 0 429 937 bekannt. Für dieses bekannte Vefahren ist es wesentlich, daß man die aus dem Vefahrensschritt (1.1) oder (1.2) resultierenden Hydrogelteilchen bei maximal 180°C unter einem Vakuum von 13,3 mbar so lange trocknet, bis kein Gewichtsverlust mehr auftritt. Hierbei sind Trocknungszeiten von mehreren Stunden notwendig.

Der nach dem bekannten Verfahren hergestellte Trägerkatalystor für die Polymerisation von α-Olefinen liefert Ethylenhomopolymerisate und Ethylencopolymerisate mit untergeordneten Mengen an einpolymerisierten C₃- bis C₁₂-α-Monoolefinen, welche eine hohe Tieftemperaturzähigkeit, eine gute Verarbeitbarkeit und eine optimale Morphologie der Polymerisatteilchen aufweisen. Indes zwingen die Wünsche des Marktes zu einer steten Weiterentwicklung sowohl des Trägerkatalysators als auch der hiermit hergestellten Homo- und Copolymerisate des Ethylens. Im Hinblick auf diese Anforderung des Marktes erschien es wünschenswert, die Tieftemperaturzähigkeit der betreffenden hochmolekularen Homo- und Copolymerisate des Ethylens noch weiter zu steigern, ohne hierbei ihre gute Verarbeitbarkeit nachteilig zu beeinflussen. Dabei war es das Ziel, bereits aus Polymerisatgrieß - so wie er bei der Herstellung der Polymerisate anfällt - Formteile einer Schockzähigkeit herstellen zu können, wie sie sonst nur nach Homogenisierung der Polymerisate durch beispielsweise Walzen oder Extrudieren erzielt werden kann. Zugleich sollte die bereits vorhandene optimale Morphologie der Polymerisatteilchen beibehalten werden. Darüber hinaus war aus wirtschaftlichen Gründen noch eine Steigerung der Produktivität des Trägerkatalysators zu fordern.

Aufgabe der vorliegenden Erfindung war es, ein neues Verfahren zu finden, welches die Herstellung eines neuen Trägerkatalysators für die Polymerisation von α-Olefinen in besonders einfacher und zuverlässiger Weise gestattet, wobei der neue Trägerkatalysator sich insbesondere für die Herstellung von hochmolekularen, besonders zähen und gut verarbeitbaren Homo- und Copolymerisaten des Ethylens von optimaler Morphologie der betreffenden Polymerisatteilchen eignen sollte.

Ausgehend von der EP-A 0 429 937 wurde diese Aufgabe in nicht vorhersehbarer Weise elegant dadurch gelöst, daß man die Trocknung der für die Herstellung des Trägerkatalysators erforderlichen Hydrogelteilchen modifizierte. Im Hinblick auf den Stand der Technik war es überraschend, daß die bei dem neuen Verfahren anzuwendenden vergleichsweise hohen Trocknungstemperaturen keine nachteiligen, sondern nur vorteilhafte Folgen haben.

Demgemäß handelt es sich bei dem Gegenstand der vorliegenden Erfindung um ein Verfahren zur Herstellung eines Trägerkatalysators für die Polymerisation von α-Olefinen, bei welchem man
(1) ein Siliciumdioxid enthaltendes Trägergel herstellt, indem man
   (1.1) in einen unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfenförmig versprüht, zum Hydrogel erstarren läßt und das so erhaltene Hydrogel ohne vorherige Alterung durch Waschen von Salzen befreit,
   (1.2) gegebenenfalls aus dem Hydrogel (1.1) mit Hilfe mindestens eines C₁- bis C₄-Alkohols und/oder C₃- bis C₅-Ketons maximal 30 % des im Hydrogel enthaltenen Wassers extrahiert,
   (1.3) das Hydrogel trocknet, wobei die Trägergel-Bildung erfolgt, und
   (1.4) das resultierende Trägergel mahlt und fraktioniert,
(2) das Trägergel (1) mit Chromtrioxid oder einer unter den Bedingungen des Verfahrensschritts (3) in Chromtrioxid überführbaren Chromverbindung belädt, wonach man
(3) das chromhaltige Trägergel (2) in einem wasserfreien, Sauerstoff in einer Konzentration von über 10 Vol.-% enthaltenden Gasstrom während 10 bis 1000 Minuten auf 400 bis 1100°C erhitzt,
wobei das Verfahren dadurch gekennzeichnet ist, daß man das aus dem Verfahrensschritt (1.1) oder (1.2) resultierende Hydrogel im Verfahrensschritt (1.3) innerhalb einer Zeit von höchstens 300 Sekunden in einem Schnelltrockner bei einer Eingangstemperatur von 200 bis 600°C trocknet.

Ein weiterer Gegenstand der vorliegenden Erfindung ist ein neuer Trägerkatalysator für die Polymerisation von α-Olefinen, welcher durch das neue Verfahren herstellbar ist.

Im folgenden wird das neue Verfahren zur Herstellung eines Trägerkatalysators für die Polymerisation von α-Olefinen der Kürze halber als "erfindungsgemäßes Verfahren" bezeichnet. Aus demselben Grund wird der neue Trägerkatalystor für die Polymerisation von α-Olefinen nachstehend kurz "erfindungsgemäßer Trägerkatalysator" genannt.

Das erfindungsgemäße Verfahren geht von der Herstellung des siliciumdioxidhaltigen Trägergels (1) aus (Verfahrensschritt 1).

Zu diesem Zweck wird zunächst das aus der DE-B-25 40 278 bekannte Kieselsäure-Hydrogel hergestellt (Verfahrensschritt 1.1). Dieses bekannte Kieselsäure-Hydrogel weist im allgemeinen einen Feststoffgehalt von 10 bis 25 Gew.-% (berechnet als Siliciumdioxid oder Aluminiumsiliciumoxid) auf. Im allgemeinen ist es kugelförmig mit einem Teilchendurchmesser im Bereich von 1 bis 8 mm. Es wird erhalten, indem man in einen unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfen-förmig versprüht, zum Hydrogel erstarren läßt und das so erhaltene weitgehend kugelförmige Hydrogel ohne vorherige Alterung durch Waschen von Salzen befreit.

Die Mineralsäure kann noch Aluminiumionen enthalten. Sofern in der Mineralsäure Aluminiumionen vorhanden sein sollen, werden sie in einer Menge angewandt, welche einen Al₂O₃-Gehalt des Trägergels (1) von 1 bis 15 Gew.% bewirkt.

Hiernach können bis maximal 30 Gew.-% des in den Hydrogelteilchen enthaltenen Wassers extrahiert werden. Hierfür kommen vor allem organische Lösungsmittel in Betracht. Beispiele geeigneter organischer Lösungsmittel sind C₁- bis C₄-Alkohole, wie Methanol, Ethanol, Isopropanol und tert.-Butanol, C₃- bis C₅-Ketone, wie Aceton oder Butanon sowie Gemische aus diesen Lösungsmitteln. Vorteilhafterweise werden bei einer Extraktion 0,1 bis 30 Gew.-%, insbesondere 1 bis 20 Gew.-%, des im Hydrogel enthaltenen Wassers extrahiert. Methodisch gesehen weist die Extraktion des Wassers keine Besonderheiten auf, sondern kann in den üblichen und bekannten Extraktionsvorrichtungen wie Säulenextraktoren erfolgen. Außerdem ist es für die Extraktion von Vorteil, dem Lösungsmittel vor dem Extrahieren bis zu 50 Vol.-% Wasser zuzusetzen, sofern dies ohne Entmischung möglich ist. Die Begrenzung der Extraktion auf maximal 30 Gew.-% des im Hydrogel vorhandenen Wassers kann über Verfahrensparameter wie Flüssigkeitsmengen, Extraktionstempertur und Extraktionszeit gesteuert werden.

Erfindungsgemäß wird nun das aus dem Verfahrensschritt (1.1) oder (1.2) resultierende Hydrogel in einem Schnelltrockner bei einer Eingangstemperatur von 200 bis 600°C innerhalb einer Zeit von höchstens 300 Sekunden getrocknet (Verfahrensschritt 1.3).

Erfindungsgemäß soll die Trocknungszeit der Hydrogelteilchen 300 Sekunden nicht überschreiten. Zwar wäre es denkbar, längere Trocknungszeiten anzuwenden, indes kann es hierbei in nicht vorhersehbarer Weise zu einer nachhaltigen Schädigung der Hydrogelteilchen und zur Bildung unbrauchbarer Trägergelteilchen kommen. Bei der Zeit von 300 Sekunden handelt es sich demnach um eine Obergrenze, welche im Interesse des Verfahrenserfolgs nicht überschritten werden sollte. Hierbei ist es erfindungsgemäß von Vorteil, Trocknungszeiten von weniger als 60 Sekunden anzuwenden, weil hierdurch in besonders zuverlässiger Weise Trägergelteilchen eines hervorragenden anwendungstechnischen Eigenschaftprofils resultieren. Noch vorteilhafter ist es, eine Trocknungszeit von weniger als 10 Sekunden einzuhalten, weil die in dieser kurzen Trocknungszeit gebildeten Trägergelteilchen für die Zwecke der vorliegenden Erfindung ganz besonders gut geeignet sind.

Erfindungsgemäß liegen die Eingangstemperaturen des Schnelltrockners bei 200 bis 600°C. Im allgemeinen empfiehlt es sich nicht, höhere Temperaturen anzuwenden, weil hierdurch weder eine Verkürzung der Trocknungszeit noch eine weitere Verbesserung der anwendungstechnischen Eigenschaften der Trägergelteilchen resultieren. Im Gegenteil können höhere Temperaturen unerwünschte Sintervorgänge auslösen. Ebensowenig empfiehlt es sich, Temperaturen unterhalb 200°C anzuwenden, weil hierdurch Trägergelteilchen mit wechselndem Restwassergehalt resultieren. Demnach handelt es sich bei dem Temperaturbereich von 200 bis 600°C um einen optimalen Bereich, innerhalb dessen die Temperatur frei gewählt und den jeweiligen anderen Verfahrensparametern in hervorragender Weise angepaßt werden kann. Innerhalb dieses Temperaturbereichs ist derjenige von 350 bis 450°C hervorzuheben, weil die Eingangstemperaturen in diesem Bereich das Ergebnis des erfindungsgemäßen Verfahrens ganz besonders günstig beeinflussen.

Erfindungsgemäß werden für die Trocknung Schnelltrockner angewandt. Hierbei kann es sich um die üblichen und bekannten Strom- oder Rohrtrockner, Wirbelbetttrockner oder Mikrowellentrockner handeln. Vorzugsweise werden die Rohrtrockner angewandt. Im allgemeinen haben diese eine Rohrlänge von 5 und mehr Metern und Rohrdurchmesser von 40 bis 150 mm. Im allgemeinen arbeiten sie mit einem Gasdurchsatz an Brenngas oder Heißluft in der Größenordnung von 100 bis 3000 kg/h, insbesondere 800 bis 2000 kg/h. Vorteilhafterweise wird das zu trocknende Hydrogel seitlich in das Rohr des Rohrtrockners eingebracht, wo es vom durchströmenden Gas mitgerissen wird. Hierbei kann das Gas den Rohrtrockner linear oder tangential durchströmen, was eine Steuerung der Verweilzeit zuläßt. Üblicherweise wird das bei der Trocknung resultierende Trägergel (1) nach dem Durchlaufen des Rohrtrockners in üblichen und bekannten Abscheidungsvorrichtungen wie ein Zyklon abgeschieden.

Die in vorstehend beschriebener Weise erhaltenen Trägergele (1) werden mit üblichen und bekannten Mahlvorrichtungen gemahlen und durch Sieben fraktioniert (Verfahrensschritt 1.4). Hierbei ist es von Vorteil, die Trägergele (1) auf Teilchen mit einem Durchmesser von 1 bis 2000 µm, insbesondere 1 bis 300 µm zu fraktionieren. Besonders vorteilhafte Trägergelteilchen (1) haben eine Oberfläche von 100 bis 1000, insbesondere 200 bis 600 m²/g und ein Porenvolumen von 0,5 bis 1,5, insbesondere 0,8 bis 1,3 cm³/g. Im allgemeinen liegt der Porenradius bei 40 bis 80 Å, insbesondere 45 bis 65 Å.

Die in erfindungsgemäßer Weise erhaltenen Trägergelteilchen (1) eignen sich hervorragend für die Herstellung des erfindungsgemäßen Katalysators.

Dazu werden die in der vorstehend beschriebenen Weise hergestellten Trägergelteilchen (1) im Verfahrensschritt (2) nach bekannten Methoden, wie sie beispielsweise in der DE-B-25 40 278 oder der DE-A-36 40 802 beschrieben werden, mit Chromtrioxid oder einer Chromverbindung beladen, welche unter den Bedingungen des nachstehend im Detail beschriebenen Verfahrensschritts (3) in Chromtrioxid überführt werden kann. Die Beladung erfolgt in einem Gewichtsverhältnis Trägergel (1) : Chrom von 100:0,1 bis 100:10, insbesondere 100:0,3 bis 100:3.

Vorteilhafterweise wird hierbei das Trägergel (1) in einer Lösung von Chromtrioxid oder einer unter den Bedingungen des Verfahrensschritts (3) in Chromtrioxid überführbaren Verbindung suspendiert, wonach man unter möglichst homogener Durchmischung der Suspension deren flüssige Bestandteile wie Alkohole und/oder Ketone sowie gegebenenfalls noch Wasser verdampft. Vorzugsweise werden hierbei Temperaturen von 20 bis 150°C und Drücke von 10 mbar bis 1 bar eingehalten. Hierbei erweist es sich als gewisser Vorteil, wenn das chromhaltige Trägergel (2) noch eine gewisse Restfeuchte aufweist. Allerdings sollen die flüchtigen Bestandteile nicht mehr als 20, insbesondere nicht mehr als 10 Gew.-%, bezogen auf das Trägergel (2), betragen.

Beispiele geeigneter Chromverbindungen sind außer Chromtrioxid und Chromhydroxid Salze des dreiwertigen Chroms mit organischen und anorganischen Säuren wie Chromacetat, -oxalat, -sulfat und -nitrat sowie Chelate des dreiwertigen Chrom wie Chromacetylacetonat. Von diesen sind die Verbindungen bevorzugt, welche im Verfahrensschritt (3) rückstandsfrei in Chromtrioxid übergehen. Von diesen wiederumg wird Chrom(III)nitrat-9-hydrat ganz besonders bevorzugt verwendet.

Bei der Herstellung des chromhaltigen Trägergels (2) können auf das aus dem Verfahrensschritt (1) resultierende Trägergel noch anorganische fluoridhaltige Verbindungen aufgetragen werden. Beispiele geeigneter anorganischer fluoridhaltiger Verbindungen sind Lithium-, Natrium- und Kaliumfluorid sowie Ammonium-, Natrium- und Kaliumhexafluorsilikat, von denen Ammoniumhexafluorsilikat besonders vorteilhaft ist. Hierbei können die anorganischen fluoridhaltigen Verbindungen aus wäßriger Lösung oder als Feststoffe aufgetragen werden. Vorteilhafterweise werden sie in einer Menge aufgetragen, daß ein Gehalt der chromhaltigen Trägergelteilchen (2) an Fluorid von 0,1 bis 3,2 Gew.-% resultiert.

Im Verfahrensschritt (3) des erfindungsgemäßen Verfahrens wird das chromhaltige Trägergel (2) aktiviert. Methodisch gesehen weist diese Aktivierung keine Besonderheiten auf, sondern kann nach den aus der DE-A-15 20 467 bekannten Methoden erfolgen. Vorteilhafterweise wird hierbei das chromhaltige Trägergel (2) in einem wasserfreien, Sauerstoff in einer Konzentration von über 10 Vol.-% enthaltenden Gasstrom während 10 bis 1000 Minuten, insbesondere 150 bis 750 Minuten auf 400 bis 1100, insbesondere 500 bis 800°C, erhitzt und danach auf Raumtemperatur abgekühlt, wodurch der erfindungsgemäße Trägerkatalysator resultiert.

Im Verfahrensschritt (3) kann außerdem noch mindestens eine der vorstehend genannten anorganischen fluoridhaltigen Verbindungen auf die noch vorhandenen chromhaltigen Trägergelteilchen (2) oder die bereits vorhandenen Teilchen des erfindungsgemäßen Trägerkatalysators in üblicher und bekannter Weise in einer Menge von bis zu 5 Gew.-%, bezogen auf den erfindungsgemäßen Trägerkatalysator (3), aufgetragen werden. Vorteilhafterweise werden die Fluoride hierbei als Feststoffe aufgetragen.

Vorteilhafterweise hat der in erfindungsgemäßer Verfahrensweise erhaltene erfindungsgemäße Trägerkatalysator einen Chromgehalt von 0,5 bis 3,0, insbesondere 0,7 bis 1,5 Gew.-%, und kann direkt für die Polymerisation von α-Olefinen nach allen bekannten Verfahren verwendet werden.

Unabhängig davon, ob es sich bei diesen bekannten Polymerisationsverfahren um diskontinuierliche oder kontinuierliche Suspensionspolymerisationsverfahren oder Trockenphasenpolymerisationsverfahren im gerührten oder gewirbelten Festbett handelt, ist der erfindungsgemäße Katalysator dem bislang bekannten überlegen und liefert α-Olefinpolymerisate mit ausgezeichnetem anwendungstechnischem Eigenschaftsprofil. Besondere Vorteile weist der erfindungsgemäße Trägerkatalysator bei der Herstellung von grießförmigen Ethylenhomopolymerisaten und von Copolymerisaten des Ethylens mit untergeordneten Mengen an einpolymerisierten C₃- bis C₁₂-α-Monoolefinen durch Polymerisation des oder der Monomeren bei Temperaturen von 70 bis 150°C und Drücken von 2 bis 150 bar auf. Die hierbei resultierenden Polymerisate zeichnen sich durch eine hohe Molmasse, charakterisiert durch Grenzviskositäten von 3,0 bis 6,0 dl/g, eine besonders hohe Zähigkeit, eine gute Verarbeitbarkeit und eine sehr gute Polymerisatmorphologie aus. Im allgemeinen liegt ihr Schmelzflußindex (190°C, 2,16 kp) bei 0,01 bis 0,5 g/10 min. Im allgemeinen liegt der Schmelzflußindex bei hoher Belastung (190°C, 21,6 kp; HLMI) bei 1,0 bis 20 g/10 min, woraus ein Schmelzflußverhältnis von 50 bis 200 resultiert. Insbesondere aber zeichnet sich der erfindungsgemäße Trägerkatalysator bei den genannten Polymerisationsverfahren durch eine im Vergleich zum Stand der Technik ungewöhnlich hohe Produktivität aus. Die mit Hilfe des erfindungsgemäßen Trägerkatalysators hergestellten Polymerisate von α-Olefinen eignen sich vor allem für die Herstellung von Folien und Formteilen nach dem Folienblas- und Blasform-Verfahren. Hierbei weisen bereits die ohne vorangegangene Homogenisierung direkt aus Polymerisatgrieß hergestellten Polymerisate eine außergewöhnlich hohe Schockzähigkeit auf. Außerdem eignen sich die mit Hilfe des erfindungsgemäßen Katalysators hergestellten Homo- und Copolymerisate des Ethylens hervorragend für die Herstellung von Behältern mit Gefahrgutzulassung.

### Beispiele und Vergleichsversuch

### Beispiel 1

Die Herstellung des erfindungsgemäßen Trägerkatalysators mit Hilfe des erfindungsgemäßen Verfahrens und seine Verwendung zur Polymerisation von Ethylen

### Versuchsvorschrift:

1.1 Die Herstellung des Trägergels (1)
Für die Herstellung des Trägergels (1) wurde eine in der Figur der US-A-38 72 217 dargestellte Mischdüse der folgenden Abmessungen benutzt: der Durchmesser der zylindrischen, aus einem Kunststoffschlauch gebildeten Mischkammer betrug 14 mm, die Mischraumlänge (einschließlich der Nachmischstrecke) lag bei 350 mm. Nahe der stirnseitig verschlossenen Eintrittsseite der Mischkammer war eine tangentiale Einlaufbohrung von 4 mm Durchmesser für die Mineralsäure angebracht. Es schlossen sich vier weitere Bohrungen mit ebenfalls 4 mm Durchmesser und gleicher Einlaufrichtung für die Wasserglaslösung an, wobei der Abstand der Bohrungen voneinander, in Längsrichtung der Mischkammer gemessen, 30 mm betrug. Für die primäre Mischzone war demnach das Verhältnis von Länge zu Durchmesser in etwa gleich 10. Für die sich anschließende sekundäre Mischzone lag dieses Verhältnis bei 15. Als Spritzmundstück wurde ein flachgedrücktes, leicht nierenförmig ausgebildetes Rohrstück über das Austrittsende des Kunststoffschlauchs geschoben.
Diese Mischvorrichtung wurde mit 325 l/h 33 gew.-%iger Schwefelsäure von 20°C mit einem Betriebsdruck von ca. 3 bar sowie 1100 l/h Wasserglaslösung (hergestellt aus technischem Wasserglas mit 27 Gew.-% SiO₂ und 8 Gew.-% Na₂O durch Verdünnen mit Wasser) mit einem Litergewicht von 1,2 kg/l und einer Temperatur von gleichfalls 20°C mit einem Druck von ebenfalls ca. 3 bar beschickt. In der mit dem Kunsttoffschlauch ausgekleideten Mischkammer wurde durch fortschreitende Neutralisation ein unbeständiges Hydrosol mit einem pH-Wert zwischen 7 und 8 gebildet, welches bis zur vollständigen Homogenisierung noch etwa 0,1 Sekunden in der Nachmischzone verblieb, bevor es durch das Düsenmundstück als flächenförmiger Flüssigkeitsstrahl in die Atmosphäre gespritzt wurde. Der Strahl zerteilte sich während des Flugs durch die Luft in einzelne Tropfen, welche infolge der Oberflächenspannung in eine weitgehend kugelige Form übergingen und noch während ihres Flugs innerhalb ca. 1 Sekunde zu Hydrogel-Kugeln erstarrten. Die Kugeln hatten eine glatte Oberfläche, waren glasklar, enthielten etwa 17 Gew.-% Siliciumdioxid und hatten folgende Kornverteilung:

| | |
|---|---|
| > 8 mm | 10 Gewichtsprozent |
| 6-8 mm | 45 Gewichtsprozent |
| 4-6 mm | 34 Gewichtsprozent |
| < 4 mm | 11 Gewichtsprozent |

Die Hydrogel-Kugeln wurden am Ende ihres Fluges in einem Waschturm aufgefangen, welcher nahezu vollständig mit Hydrogel-Kugeln gefüllt war und worin die Kugeln sofort ohne Alterung mit in etwa 50°C warmem, schwach ammoniakalischem Wasser in einem kontinuierlich verlaufenden Gegenstromprozeß salzfrei gewaschen wurden.
Im Anschluß daran wurden die Kugeln in einer Mühle auf einen Durchmesser von < 2 mm zerkleinert. Das zerkleinerte Hydrogel wurde dann einem Rohtrockner einer Rohrlänge von 5 m, eines Rohrdurchmessers von 80 mm und einer Eingangstemperatur von 400°C zugeführt und bei dieser Temperatur mit einer Verweilzeit von 2 Sekunden getrocknet. Das resultierende Trägergel (1) wurde in einem Zyklon abgeschieden und gemahlen. Durch Sieben wurde Teile von 1 bis 300 µm fraktioniert.
1.2 Die Herstellung des erfindungsgemäßen Trägerkatalysators
15 kg des vorstehend beschriebenen Trägergels (1) und 40 l einer 4,1 gew.-%igen Lösung von Chrom(III)nitrat-9-hydrat in Ethanol wurden in einen Doppelkonusmischer gefüllt. Unter Rotation des von außen mit Dampf auf 130°C beheizten Mischers wurde dann im Wasserstrahlvakuum das Ethanol abdestilliert.
Das hierbei resultierende chromhaltige Trägergel (2) wurde in einem Fließbett, welches von Luft durchströmt wurde, während 6 Stunden auf 600°C erhitzt und danach wieder abgekühlt. Beim Abkühlvorgang wurde ab dem Erreichen einer Temperatur von 140°C das Fliepbett mit Stickstoff gespült, um Sauerstoffspuren, welche bei der Polymerisation stören, zu beseitigen.
Der resultierende erfindungsgemäße Trägerkatalysator hatte einen elementaranalytisch ermittelten Chromgehalt von 2 x 10⁻⁴ mol/g.
1.3 Die Polymerisation von Ethylen mit Hilfe des erfindungsgemäßen Trägerkatalysators
Für die Polymerisation des Ethylens wurde ein üblicher und bekannter Schleifenreaktor verwendet, dessen Reaktionsraum aus einem Rohrkreis von 6 m³ Inhalt bestand. Der Reaktionsraum war mit einer 45 gew.%igen Suspension von Polymerisat in Isobutan gefüllt. Diese Suspension wurde durch eine Propellerpumpe mit 3000 Upm so rasch umgepumpt, daß eine turbulente Strömung im Reaktor vorhanden war. Hierbei wurde die Suspension bei einer Temperatur von 104,5°C gehalten. Weiterhin wurden durch Regelung die Menge an ein- und ausgeschleustem Suspensionsmittel von je 720 kg/h Isobutan und die Konzentration von 11 Vol.% des im Suspensionsmittel gelösten monomeren Ethylens konstant gehalten.
Im kontinuierlich-stationären Betrieb wurden bei Einschleusung von 112,5 g/h Katalysator 900 kg/h Polymerisat ausgeschleust; dies entspricht der sehr hohen Katalysatorproduktivität von 8000 kg Polyethylen pro kg Katalysator.
Bei einem HLMI von 2,0 g/10 Minuten wies das resultierende Polyethylen eine hohe Molmasse, sehr geringe Feinstkornanteile, eine hohe Polyethylenschüttdichte und eine vorzügliche Zähigkeit auf. Hierbei erwies es sich als ein ganz besonderer Vorteil, daß bereits aus Polymerisatgrieß hergestellte Formteile eine Tieftemperaturzähigkeit erreichen, wie sie sonst nur nach Homogenisierung (Walzung oder Extrusion) erhalten wird.
Zu den Details der Versuchsergebnisse vgl. die Tabelle.

### Vergleichsversuch

Die Herstellung eines Trägerkatalysators gemäß der EP-A-0 429 937 und seine Verwendung zur Polymerisation von Ethylen

Beispiel 1 wurde wiederholt, nur daß man anstelle der erfindungsgemäß durchzuführenden Trocknung aus den aus dem Verfahrensschritt (1.1) resultierenden Hydrogelkugeln diejenigen eines Durchmessers im Bereich von 2 bis 6 mm isolierte und anschließend bei 180°C unter einem Vakuum von 10 mbar während 8 Stunden trocknete; hiernach trat unter den genannten Bedingungen während 30 Minuten kein Gewichtsverlust mehr auf.

Die Polymerisation wurde wie in Beispiel 1 beschrieben durchgeführt, nur daß bei einer Polymerisationstemperatur von 105,2°C stündlich 225 g Katalystor ein- und 900 kg Polymerisat und 760 kg Isobutan ausgeschleust wurden, d.h. die Katalysatorproduktivität war nur annähernd halb so hoch wie diejenige des Beispiels 1. In der Tabelle werden die anwendungstechnischen Eigenschaften des Polyethylens des Vergleichsversuchs denjenigen der Beispiele 1 und 2 gegenübergestellt. Der Vergleich zeigt, daß das in bekannter Verfahrensweise hergestellte Polyethylen in seinen anwendungstechnischen Eigenschaften nicht ganz an das mit Hilfe des erfindungsgemäßen Trägerkatalystors hergestellte heranreichte.

### Beispiel 2

Die Herstellung des erfindungsgemäßen Trägerkatalystors mit Hilfe des erfindungsgemäßen Verfahrens und seine Verwendung zur Polymerisation von Ethylen

Beispiel 1 wurde wiederholt, nur daß bei der Herstellung des erfindungsgemäßen Trägerkatalystors im Verfahrensschritt (3) dem Fliepbett 375 g Ammoniumhexafluorsilikat hinzugefügt wurden.

Die Polymerisation wurde wie in Beispiel 1 beschrieben durchgeführt, nur daß bei einer Polymerisationstemperatur von 104,0°C stündlich 100 g Katalystor ein- und 900 kg Polymerisat und 750 kg Isobutan ausgeschleust wurden; d.h. die Katalysatorproduktivität war sogar noch höher als die des Beispiels 1.

Die anwendungstechnischen Eigenschaften des mit Hilfe des erfindungsgemäßen Trägerkatalysators hergestellten Polyethylens waren, wie die Tabelle deutlich macht, hervorragend.

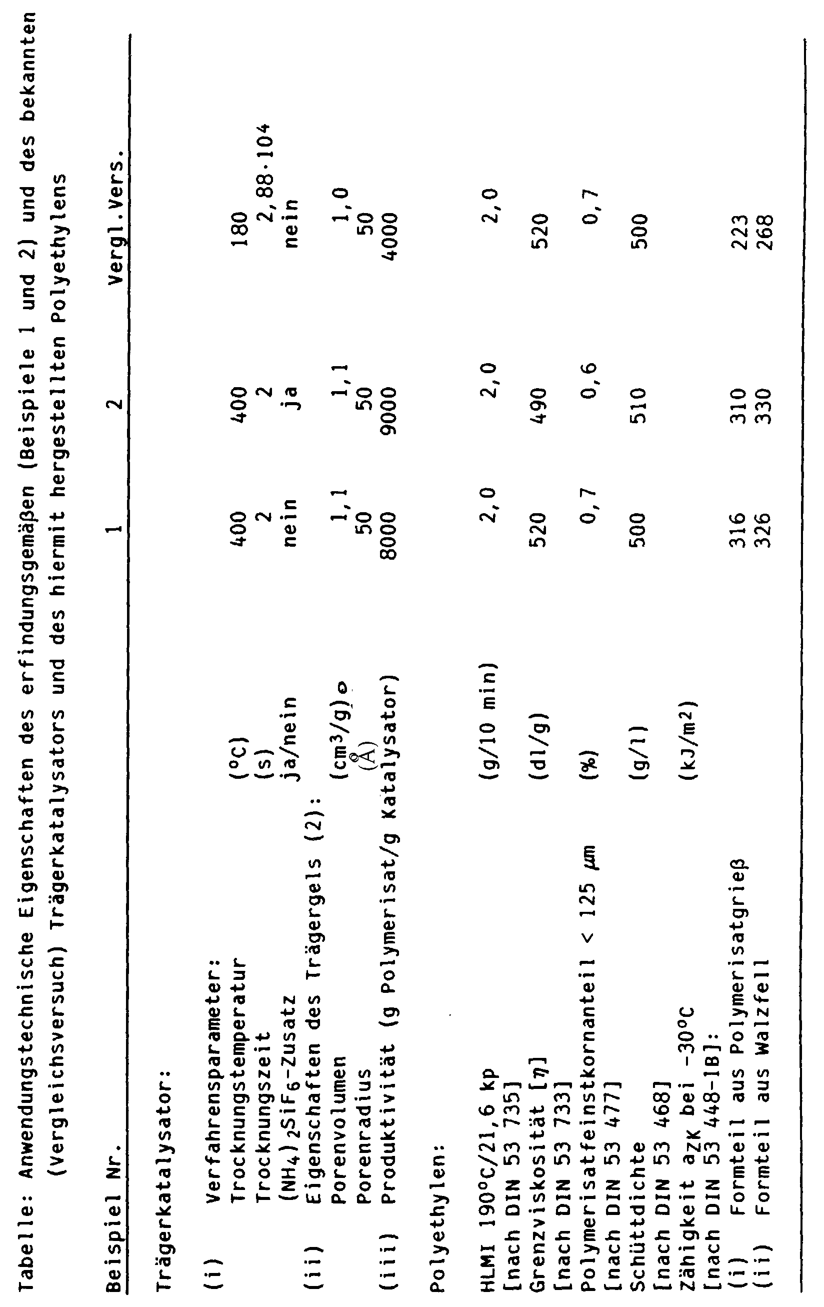

## Patentansprüche

1. Verfahren zur Herstellung eines Trägerkatalysators für die Polymerisation von α-Olefinen, bei welchen man
(1) zunächst ein Siliciumdioxid enthaltendes Trägergel herstellt, indem man
(1.1) in einen unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfenförmig versprüht, zum Hydrogel erstarren läßt und das so erhaltene Hydrogel ohne vorherige Alterung durch Waschen von Salzen befreit,
(1.2) gegebenenfalls aus dem Hydrogel (1.1) mit Hilfe mindestens eines C₁- bis C₄-Alkohols und/oder C₃- bis C₅-Ketons maximal 30 Gew.-% des im Hydrogel enthaltenen Wassers extrahiert,
(1.3) das resultierende Hydrogel (1.1) oder (1.2) trocknet, wobei die Trägergel-Bildung erfolgt, und
(1.4) das resultierende Trägergel (1.3) mahlt und nach Teilchengröße fraktioniert,
(2) das Trägergel (1) mit Chromtrioxid oder einer unter den Bedingungen des Verfahrensschritts (3) in Chromtrioxid überführbaren Chromverbindung belädt, wodurch ein chromhaltiges Trägergel entsteht, und
(3) das chromhaltige Trägergel (2) in einem wasserfreien, Sauerstoff in einer Konzentration von über 10 Vol.-% enthaltenden Gasstrom während 10 bis 1000 Minuten auf 400 bis 1100°C erhitzt,
dadurch gekennzeichnet, daß man das aus dem Verfahrensschritt (1.1) oder (1.2) resultierende Hydrogel im Verfahrensschritt (1.3) innerhalb einer Zeit von höchstens 300 Sekunden in einem Schnelltrockner bei einer Eingangstemperatur von 200 bis 600°C trocknet.

2. Das Verfahren nach Anspruch 1, dadurch gekennzeichnet, daß die im Verfahrensschritt (1.1) verwendete wäßrige Mineralsäure Aluminiumionen enthält.

3. Das Verfahren nach Anspruch 1 oder 2, dadurch gekennzeichnet, daß man die Trocknung (1.3) ohne vorhergehende Extraktion (1.2) des Hydrogels durchführt.

4. Das Verfahren nach einem der Ansprüche 1 bis 3, dadurch gekennzeichnet, daß das Trägergel (1) einen Teilchendurchmesser von 1 bis 2000 µm, eine Oberfläche von 100 bis 1000 m²/g und ein Porenvolumen von 0,5 bis 1,5 cm³/g hat.

5. Das Verfahren nach einem der Ansprüche 1 bis 4, dadurch gekennzeichnet, daß der Porenradius des Trägergels (1) bei 40 bis 80 Å liegt.

6. Das Verfahren nach einem der Ansprüche 1 bis 5, dadurch gekennzeichnet, daß dem Trägergel (1) im Verfahrensschritt (2) oder dem Trägergel (2) im Verfahrensschritt (3) anorganische fluoridhaltige Verbindungen zugesetzt werden.

7. Trägerkatalysator für die Polymerisation von α-Olefinen, erhältlich indem man
(1) zunächst ein Siliciumdioxid enthaltendes Trägergel herstellt, indem man
(1.1) in einen unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfenförmig versprüht, zum Hydrogel erstarren läßt und das so erhaltene Hydrogel ohne vorherige Alterung durch Waschen von Salzen befreit,
(1.2) gegebenenfalls aus dem Hydrogel (1.1) mit Hilfe mindestens eines C₁- bis C₄-Alkohols und/oder C₃- bis C₅-Ketons maximal 30 Gew.-% des im Hydrogel enthaltenen Wassers extrahiert,
(1.3) das resultierende Hydrogel (1.1) oder (1.2) trocknet, wobei die Trägergel-Bildung erfolgt, und
(1.4) das resultierende Trägergel (1.3) mahlt und nach Teilchengröpe fraktioniert,
(2) das Trägergel (1) mit Chromtrioxid oder einer unter den Bedingungen des Verfahrensschritts (3) in Chromtrioxid überführbaren Chromverbindung belädt, wodurch ein chromhaltiges Trägergel entsteht, und
(3) das chromhaltige Trägergel (2) in einem wasserfreien, Sauerstoff in einer Konzentration von über 10 Vol.-% enthaltenden Gasstrom während 10 bis 1000 Minuten auf 400 bis 1100°C erhitzt,
dadurch gekennzeichnet, daß man das aus dem Verfahrensschritt (1.1) oder (1.2) resultierende Hydrogel im Verfahrensschritt (1.3) innerhalb einer Zeit von höchstens 300 Sekunden in einem Schnelltrockner bei einer Eingangstemperatur von 200 bis 600°C trocknet.

8. Verfahren zur Herstellung von hochmolekularen Ethylenhomopolymerisaten und Copolymerisaten des Ethylens mit untergeordneten Mengen an einpolymerisierten C₃- bis C₁₂-α-Monoolefinen durch Polymerisation der Monomeren bei Temperaturen von 70 bis 150°C und Drücken von 2 bis 150 bar mittels eines Chromtrioxid-Katalysators, dadurch gekennzeichnet, daß man als Chromtrioxid-Katalysator den Trägerkatalysator gemäß Anspruch 7 verwendet.

9. Ethylenhomopolymerisate oder Copolymerisate des Ethylens mit untergeordneten Mengen an einpolymerisierten C₃- bis C₁₂-α-Monoolefinen in granularer Form mit einer durchschnittlichen Teilchengröße von 0,5 bis 1,5 mm, einem Schmelzindex (190°C, 21,6 kp) von 1,0 bis 20,0 g/10 min, einem Schmelzflußverhältnis von 50 bis 200 und einer Schüttdichte von 470 bis 570 g/l, herstellbar durch das Verfahren gemäß Anspruch 8.

## Claims

1. A process for the preparation of a supported catalyst for the polymerization of α-olefins, in which
(1) a silica-containing carrier gel is first prepared by a method in which
(1.1) a sodium or potassium waterglass solution is introduced into a stream of an aqueous mineral acid which is subjected to angular momentum, longitudinally and tangentially to the stream, the resulting silica hydrosol is sprayed in the form of drops into a gaseous medium and is allowed to solidify to a hydrogel, and the resulting hydrogel is freed from salts by washing without prior aging,
(1.2) if necessary, not more than 30% by weight of the water present in the hydrogel is extracted from the hydrogel (1.1) with the aid of at least one C₁-C₄-alcohol and/or C₃-C₅-ketone,
(1.3) the resulting hydrogel (1.1) or (1.2) is dried, carrier gel formation taking place, and
(1.4) the resulting carrier gel (1.3) is milled and is fractionated according to particle size,
(2) the carrier gel (1) is laden with chromium trioxide or with a chromium compound which can be converted into chromium trioxide under the conditions of process step (3), resulting in a chromium-containing carrier gel, and
(3) the chromium-containing carrier gel (2) is heated at from 400 to 1,100°C for from 10 to 1,000 minutes in an anhydrous gas stream containing oxygen in a concentration of more than 10% by volume,
wherein the hydrogel resulting from process step (1.1) or (1.2) is dried in process step (1.3) in the course of not more than 300 seconds in a fast dryer at an inlet temperature of from 200 to 600°C.

2. A process as claimed in claim 1, wherein the aqueous mineral acid used in process step (1.1) contains aluminum ions.

3. A process as claimed in claim 1 or 2, wherein the drying (1.3) is carried out without prior extraction (1.2) of the hydrogel.

4. A process as claimed in claim 1 or 2 or 3, wherein the carrier gel (1) has a particle diameter of from 1 to 2,000 µm, a surface area of from 100 to 1,000 m²/g and a pore volume of from 0.5 to 1.5 cm³/g.

5. A process as claimed in claim 1 or 2 or 3 or 4, wherein the pore radius of the carrier gel (1) is from 40 to 80 Å.

6. A process as claimed in claim 1 or 2 or 3 or 4 or 5, wherein inorganic fluoride-containing compounds are added to the carrier gel (1) in process step (2) or to the carrier gel (2) in process step (3).

7. A supported catalyst for the polymerization of α-olefins, obtainable by following a procedure in which
(1) a silica-containing carrier gel is first prepared by a method in which
(1.1) a sodium or potassium waterglass solution is introduced into a stream of an aqueous mineral acid which is subjected to angular momentum, longitudinally and tangentially to the stream, the resulting silica hydrosol is sprayed in the form of drops into a gaseous medium and is allowed to solidify to a hydrogel, and the resulting hydrogel is freed from salts by washing without prior aging,
(1.2) if necessary, not more than 30% by weight of the water present in the hydrogel is extracted from the hydrogel (1.1) with the aid of at least one C₁-C₄-alcohol and/or C₃-C₅-ketone,
(1.3) the resulting hydrogel (1.1) or (1.2) is dried, carrier gel formation taking place, and
(1.4) the resulting carrier gel (1.3) is milled and is fractionated according to particle size,
(2) the carrier gel (1) is laden with chromium trioxide or with a chromium compound which can be converted into chromium trioxide under the conditions of process step (3), resulting in a chromium-containing carrier gel, and
(3) the chromium-containing carrier gel (2) is heated at from 400 to 1,100°C for from 10 to 1,000 minutes in an anhydrous gas stream containing oxygen in a concentration of more than 10% by volume,
wherein the hydrogel resulting from process step (1.1) or (1.2) is dried in process step (1.3) in the course of not more than 300 seconds in a fast dryer at an inlet temperature of from 200 to 600°C.

8. A process for the preparation of high molecular weight ethylene homopolymers and copolymers of ethylene with minor amounts of polymerized C₃-C₁₂-α-monoolefins by polymerization of the monomers at from 70 to 150°C and from 2 to 150 bar by means of a chromium trioxide catalyst, wherein a supported catalyst as claimed in claim 7 is used as the chromium trioxide catalyst.

9. An ethylene homopolymer or a copolymer of ethylene with minor amounts of polymerized C₃-C₁₂-α-monoolefins in granular form having a mean particle size of from 0.5 to 1.5 mm, a melt flow index (190°C, 21.6 kp) of from 1.0 to 20.0 g/10 min, a melt flow ratio of from 50 to 200 and a bulk density of from 470 to 570 g/l, which can be prepared by a process as claimed in claim 8.

## Revendications

1. Procédé de préparation d'un catalyseur sur support pour la polymérisation d'α-oléfines, dans lequel
1) on commence par préparer un gel de support qui contient du dioxyde de silicium,
1.1) en introduisant, dans un courant en rotation rapide d'un acide minéral aqueux, longitudinalement et tangentiellement par rapport au courant, une solution d'orthosilicate de sodium ou de potassium, puis en pulvérisant l'hydrosol d'acide silicique ainsi formé sous forme de gouttes dans un milieu gazeux, en le laissant se solidifier en hydrogel et en débarrassant de sels l'hydrogel ainsi obtenu par lavage sans vieillissement préalable,
1.2) en extrayant éventuellement de l'hydrogel (1.1), au moyen d'au moins un alcool en C₁-C₄ et/ou d'une cétone en C₃-C₅, 30% en poids au maximum de l'eau contenue dans l'hydrogel,
1.3) en séchant l'hydrogel (1.1) ou (1.2) résultant, ce qui donne le gel de support, et
1.4) en broyant le gel de support (1.3) résultant et en le fractionnant selon la grosseur de particules,
2) on charge le gel de support (1) de trioxyde de chrome ou d'un composé du chrome susceptible de se transformer en trioxyde de chrome dans les conditions de l'étape opératoire (3), ce qui donne un gel de support contenant du chrome, et
3) on chauffe le gel de support contenant du chrome (2), dans un courant de gaz anhydre contenant de l'oxygène en une concentration de plus de 10% en volume, pendant 10 à 1000 min à une température de 400 à 1100°C,
caractérisé en ce que, dans l'étape opératoire (1.3), on sèche l'hydrogel résultant de l'étape opératoire (1.1) ou (1.2), pendant une période de 300 s au maximum, dans un séchoir pour séchage rapide, à une température d'entrée de 200 à 600°C.

2. Procédé selon la revendication 1, caractérisé en ce que l'acide minéral aqueux utilisé dans l'étape opératoire (1.1) contient des ions d'aluminium.

3. Procédé selon la revendication 1 ou 2, caractérisé en ce que l'on effectue le séchage (1.3) sans extraction préalable (1.2) de l'hydrogel.

4. Procédé selon l'une quelconque des revendications 1 à 3, caractérisé en ce que le gel de support (1) a un diamètre de particules de 1 à 2000 µm, une surface de 100 à 1000 m²/g et un volume de pores de 0,5 à 1,5 cm³/g.

5. Procédé selon l'une quelconque des revendications 1 à 4, caractérisé en ce que le rayon des pores du gel de support (1) est de l'ordre de 40 à 80 Å.

6. Procédé selon l'une quelconque des revendications 1 à 5, caractérisé en ce que des composés fluorés inorganiques sont ajoutés au gel de support (1) dans l'étape opératoire (2) ou au gel de support (2) dans l'étape opératoire (3).

7. Catalyseur sur support pour la polymérisation d'α-oléfines, pouvant être obtenu de la manière suivante:
1) on commence par préparer un gel de support qui contient du dioxyde de silicium,
1.1) en introduisant, dans un courant en rotation rapide d'un acide minéral aqueux, longitudinalement et tangentiellement par rapport au courant, une solution d'orthosilicate de sodium ou de potassium, puis en pulvérisant l'hydrosol d'acide silicique ainsi formé sous forme de gouttes dans un milieu gazeux, en le laissant se solidifier en hydrogel et en débarrassant de sels l'hydrogel ainsi obtenu par lavage sans vieillissement préalable,
1.2) en extrayant éventuellement de l'hydrogel (1.1), au moyen d'au moins un alcool en C₁-C₄ et/ou d'une cétone en C₃-C₅, 30% en poids au maximum de l'eau contenue dans l'hydrogel,
1.3) en séchant l'hydrogel (1.1) ou (1.2) résultant, ce qui donne le gel de support, et
1.4) en broyant le gel de support (1.3) résultant et en le fractionnant selon la grosseur de particules,
2) on charge le gel de support (1) de trioxyde de chrome ou d'un composé du chrome susceptible de se transformer en trioxyde de chrome dans les conditions de l'étape opératoire (3), ce qui donne un gel de support contenant du chrome, et
3) on chauffe le gel de support contenant du chrome (2), dans un courant de gaz anhydre contenant de l'oxygène en une concentration de plus de 10% en volume, pendant 10 à 1000 min à une température de 400 à 1100°C,
caractérisé en ce que, dans l'étape opératoire (1.3), on sèche l'hydrogel résultant de l'étape opératoire (1.1) ou (1.2), pendant une période de 300 s au maximum, dans un séchoir pour séchage rapide, à une température d'entrée de 200 à 600°C.

8. Procédé de préparation d'homopolymères d'éthylène de poids moléculaire élevé et de copolymères de l'éthylène avec des quantités mineures d'α-monooléfines en C₃-C₁₂ en liaison polymère, par polymérisation des monomères à des températures de 70 à 150°C et sous des pressions de 2 à 150 bar, au moyen d'un catalyseur au trioxyde de chrome, caractérisé en ce que l'on utilise, comme catalyseur au trioxyde de chrome, le catalyseur sur support selon la revendication 7.

9. Homopolymères d'éthylène ou copolymères de l'éthylène avec des quantités mineures d'α-mono-oléfines en C₃-C₁₂ en liaison polymère, sous forme granulaire avec une grosseur moyenne de particules de 0,5 à 1,5 mm, un indice d'écoulement à l'état fondu (190°C, 21,6 kp) de 1,0 à 20,0 g/10 min, un rapport de viscosité à l'état fondu de 50 à 200 et une masse volumique apparente de 470 à 570 g/l, pouvant être préparés par le procédé selon la revendication 8.
